# EUROPEAN PATENT APPLICATION

(11) **EP 1 353 504 A1**
(43) Date of publication of application: **15.10.2003**
(21) Application number: 02380078.2
(22) Date of filing: 12.04.2002
(51) Int. Cl.: H04N 5/232

(54) **Remote control system for television cameras**

(71) Applicant: Movetech, S.L., 08021 Barcelona (ES)
(72) Inventor: Sasot Brosa, Carles, c/o Movotech S.L., 08021 Barcelona (ES)
(74) Representative: Maldonado Jordan, Julia

(57) **Abstract**

The system allows one or several television cameras to be controlled, in this case simultaneously and by a single operator, from any appropriate distance. For this purpose, a head (1) collaborates with each camera, said head having a mechanical part, an electronic part and computer programming. The head is equipped with its own microcomputer, and has the ability to communicate through a network and be mechanically and electronically governed at all times, and its corresponding camera optically controlled, through a manually-controlled console (2); this console essentially has the same basic elements of construction as the head. Several heads with their respective cameras and several manual consoles can participate in the system; each console can govern several heads with their cameras. A central control console (4) for automatic control also forms part of the system, equipped in this case with a central control computer that governs both the consoles (2) and the heads and cameras (1). These elements are connected through a communication channel (3), preferably made up of the pre-installation of a standard, structured communication network, such as an Ethernet network, which, if it has enough bandwidth, can even transmit the video signal captured by the cameras with the required quality.

## Description

### PURPOSE OF THE INVENTION

The invention refers to a system that makes the remote control of one or more television cameras possible, both with regard to the mobility of the camera itself, and its mechanical, electronic and optical functionality.

The system is especially applicable both in locales where major events are held, as well as in the automation of television studios, making camera positions possible that provide spectacular shots with minimal alteration to the surroundings, even when these shots may mean difficult access.

The system considerably reduces the complexity of installation and its costs, using market standards and simplifying the cabling and connections necessary to only one power supply cable and another that supports the communications channel for the control signals, which, in turn, may be eliminated if wireless control is implemented. The latter may even include, if bandwidth permits, signals of images captured with the camera with professional video quality.

### BACKGROUND OF THE INVENTION

When major events such as concerts, operas, sporting events, etc., are held at convention centers or sports and entertainment facilities, as well as when television programs are recorded in a studio, several television cameras are normally used in an attempt to obtain images for the TV viewer that are the most suitable ones at every moment, so that the producer, starting with what is filmed by each one of the cameras, uses the most suitable one at each moment in order to optimize the program.

The customary use of several TV cameras entails the need to have an operator for each of them, with the resulting negative financial impact that this has on costs.

In addition, the operator occupies a physical space when he/she is behind the camera, a space which in many cases is difficult to find; and on occasion, in order to achieve certain shots, the installation of special stands or scaffolding that substantially alter the surrounding area is necessary. These may also make access difficult for the camera operator, and impair his/her mobility, etc.

To solve these problems, high precision remote camera control systems are used, but with the drawback that these are based on complex components, often proprietary to each manufacturer, with a high cost, and which impose limits on their configuration and installation, such as in the mounting systems, the type, size and amount of cabling and connections, etc.

### DESCRIPTION OF THE INVENTION

The system the invention proposes resolves the aforementioned problems in the different areas discussed in a fully satisfactory manner, so that a single operator can simultaneously control several cameras, and thus the number of people who are operating in an entire system is minimized; in addition, the operator can be as far from the cameras as necessary, with no limitation to the distance, but with the same results as if he/she were behind each of the cameras.

In addition, the system also allows the automation, recording and reproduction of sequences of movements and images, with great precision as far as the camera position, zoom, focus, diaphragm, and other controllable variables of the cameras are concerned, to thus facilitate the operator's work, all with a considerable reduction in the space occupied, allowing cameras to be positioned in spectacular, hitherto unthinkable places, minimizing the impact they cause on the surroundings and with a low cost.

To do this, more specifically, the system is structured through the combination of a head, a manual control console, a main central control console and the corresponding communication channel.

Three parts are involved in the head: a mechanical part, an electronic part and a computer programming part with its own microcomputer.

In the manual control console, another three parts are involved that are similar to those in the head; the same occurs in the central control console, with the only exception being the fact that in this case, it is used jointly with a central computer.

The communication channel may be a structured and standard communications network, as well as a standard wireless network.

The mechanical part of the head supports the camera, forming a complete video capture subsystem that can be remotely controlled by the consoles through the computer program, so that control is achieved over panning, tilting and reserve movement axis, along with control over the optics (zoom, focus and diaphragm), and over the camera's other controllable variables.

The central control console retains the ability to manually select and control each of the heads and cameras and to order simultaneous movements, whether pre-recorded or not, of each of the heads under its control. This central control console can also control other systems that can be remotely controlled, in order to automate and facilitate production tasks with the equipment as a whole that makes up the TV studio. In addition, a computer can be added to the network, directly and with no complication whatsoever, which, with the assistance of a special computer program, can allow the position of the heads to be known with very high resolution and with a frequency that allows the generation of virtual sets in real time.

By means of the manual console, one or more heads and their cameras can be controlled sequentially, by selecting one of them at a certain moment, to which effect the console has a series of manual controls to remotely control the movements of each of the axes of the selected camera-head assembly. In addition, this console can be provided with the capability of ordering automatic movements, whether pre-recorded or not, of the heads under its control.

Using market standards, the system solves configuration and installation problems such as the difficulty of mounting the heads and their esthetic impact on the surroundings, the limitation of lengths and distances between equipment, the complexity of the cabling and the connections (in a best-case scenario, the cabling and connections necessary can be simplified to a single power supply cable), the complexity of the configuration of the system for each production according to needs (such as, for example, in the assignment of the control of the heads to the consoles), costs, etc.

A standard Ethernet network can be used as a communications channel, for example, implemented with structured cabling and RJ-45 type connections.

### DESCRIPTION OF THE DRAWINGS

To complement this description and for the purpose of allowing for better understanding of the characteristics of the invention, in accordance with the example of its preferred embodiment, a set of drawings of an illustrative and non-restrictive nature, in which the following items are represented, is attached as an integral part of this description:
Figure 1. - Shows a diagram corresponding to a manual embodiment of the system in which a manual control console and a single head are involved, interconnected through a communication channel.
Figure 2. - Shows, according to a representation similar to the one in the previous figure, a manual configuration that is also similar to the one in the previous figure, in which several heads are involved, interconnected through a communication channel.
Figure 3. - Shows a representation similar to the one in figure 1, but in which instead of a manual console, another one is used in combination with a central control computer for automatic and manual operation.
Figure 4. - Shows, according to a representation similar to those in the previous figures, a configuration that besides allowing automatic and manual operation from a central control computer, allows the cameras to be controlled from manual consoles. The system is configured as required from the central control computer.

### PREFERRED EMBODIMENT OF THE INVENTION

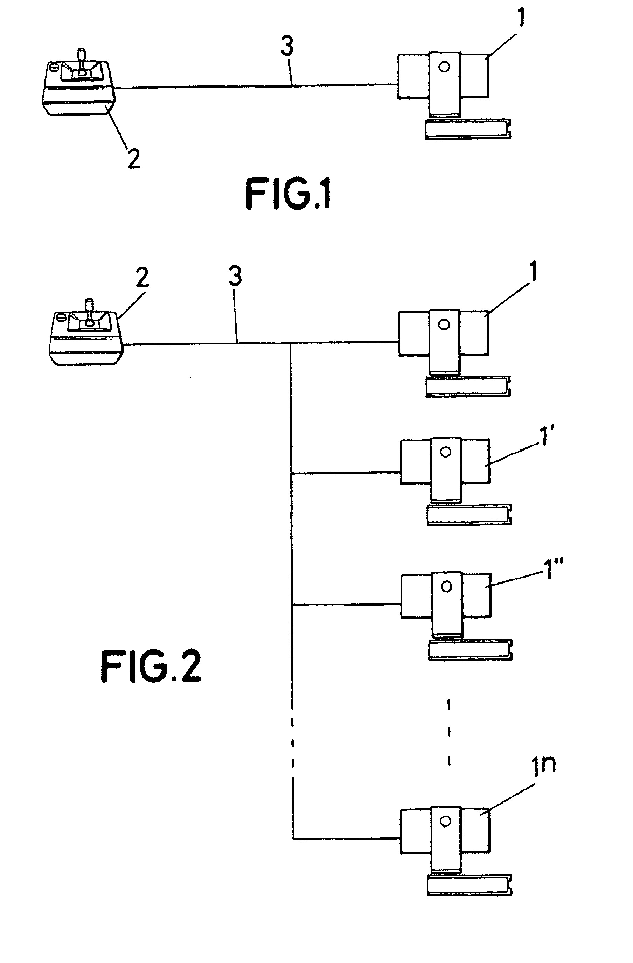

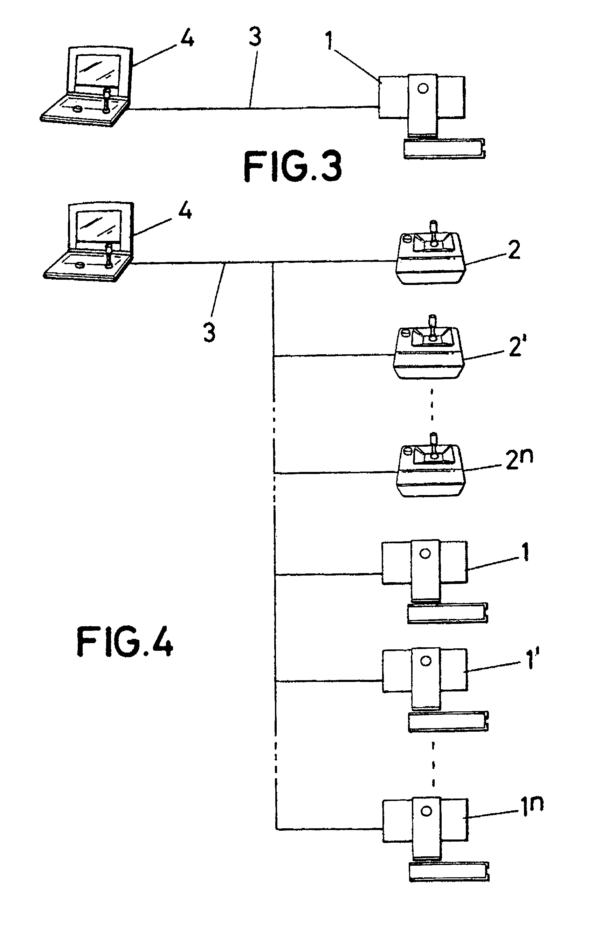

In the figures described, which reflect possible system configurations, it can be seen how a single head (1) can be associated with a manual control console (2) through the corresponding communication channel (3) [figure 1]; how several heads (1-1' -1''...-1ⁿ) can be associated with the same manual control console (2) [figure 2]; how one head (1) can be connected to a central control computer with its console (4) when automatic operation is planned (figure 3); or how different heads (1-1'...-1ⁿ) can be associated with a central control computer with its console (4) and several consoles (2-2' - ....-2ⁿ) for their control, and configured according to the needs of each production, as shown in figure 4.

In any case, each head (1) is formed by an integrated unit made up of a mechanical part and another electronic part, which supports the camera, forming a complete, remotely controllable video capture subsystem. Control is performed through a computer program which allows the movements and positioning of the following to be managed:
- The camera: panning, tilting and reserve axis
- Camera optics: zoom, focus and diaphragm
- Other of the camera's controllable parameters

Therefore, the operator can remotely control the movements of one or more heads (1) with cameras, according to requirements, as far as panning, tilting, zoom, focus, diaphragm, reserve axis and other camera parameters are concerned.

An extra axis, to be used in special applications, can also be controlled. An illustrative example may be an autonomous traveling system with a head mounted on it.

As far as the manual consoles (2) are concerned, they have the necessary, ergonomically-studied (working position, dimensions, for left or right-handed people, etc.) controls to facilitate use by the operator. Each console has a microcomputer that manages the orders requested by the operator and sends them to the video capture assembly (head and camera) through the communications network (3).

Through a manual console (2), one or more heads (1) can be controlled sequentially, by selecting each one at a certain moment.

As far as the central control console (4) is concerned, in addition to the ability to manually select and control each of the heads (1), it has the ability, as previously mentioned, to order simultaneous movements of each of the heads. More specifically, it can control each of the axes automatically through a computer program stored in the central computer. The user can govern the movements by means of an intuitive user interface.

The central control console, through the central control computer, can also control other systems that allow remote control and that enable the equipment as a whole that makes up the TV studio to automate and facilitate production work.

A pre-installed network (3), either wireless or using standard, structured cabling, can be used as a communication channel, identical to the type used in computer networks in offices (LAN, Local Area Network), with the resulting reduction in costs and ease of setup. This type of network allows two-way dialogue between subsystems at a high information transmission speed and with sufficient bandwidth.

The system allows the installation of any type of video camera, being independent from the camera's internal power supply control, which makes the most common types of optics, such as Canon and Fujinon, adaptable.

A small external assembly made up of a motor and a high-resolution encoder can also be mounted, to be connected to the zoom and/or the focus.

For the remote control of the equipment, a standard protocol is used that allows the system to be controlled by using even wide area networks (WAN), such as the Internet, for example. Thus, the equipment can be remotely controlled using market-standard routing equipment.

As far as the communications network is concerned, an Ethernet network with structured cabling can be used, as was previously mentioned, with the electronic equipment necessary to form it (hub, switcher, etc.) and with standard connections, for example, RJ-45.

The high resolution of the sensors, along with the speed at which the positions of each of the axes are transmitted at a frequency of 50 Hz (which may be increased, if necessary), allows the system to be used for real-time virtual set-generation applications.

As it is a networked system, there is always the possibility of adding a computer that, through the network and with the assistance of a program and a special library, can obtain the positions of each of the axes of each of the active heads.

## Claims

1. Remote control system for television cameras, whose aim is the control of one or more cameras by a single operator, both as far as the mobility of the camera itself and its functionality and that of its optics are concerned, **characterized by** the fact that in this system at least one head (1) is involved, on which a camera is mounted and with which at least one console (2) collaborates, assisted by a microcomputer and equipped with the means for computerized control over the video camera from a mechanical, electronic and optical standpoint, as well as being able to remotely control in real time one or more heads (1-1' - 1"...-1ⁿ), with these components being related through a communication channel (3), preferably using in that respect the pre-installation of a structured, standard communications network.

2. Remote control system for television cameras, according to claim 1, **characterized by** the fact that a central control console (4), equipped with a central control computer capable of controlling and configuring an entire system of both manual control consoles (2) and heads (1), may optionally collaborate in the system.

3. Remote control system for television cameras, according to previous claims, **characterized by** the fact that each head (1) is made up of an electronic part, another computerized part and another mechanical part, which support the camera, forming a complete video capture subsystem that can be remotely controlled through a computer program that allows panning, tilting and reserve axis movements and positioning to be managed, as well as the zoom, focus and diaphragm and other controllable camera parameters.

4. Remote control system for television cameras, according to claims 1 and 2, **characterized by** the fact that each manual console (2) is able to control one or more heads (1), and their respective cameras, sequentially, by selecting one of them at a certain moment, and is provided to that effect with a series of manual or even automatic controls, which allow the operator to remotely control the movements of each of the selected head's axes and the parameters of its respective camera.

5. Remote control system for television cameras, according to previous claims, **characterized by** the fact that the central control console (4) also has the ability to automatically order simultaneous movements and controls on each of the heads (1) and their respective cameras under its control, through the program stored in its computer.

6. Remote control system for television cameras, according to claim 5, **characterized by** the fact that, through the central control console (4) and by means of an intuitive user interface, the user can govern the movements of the heads and the camera controls.

7. Remote control system for television cameras, according to claim 5, **characterized by** the fact that the central control console (4) can control other systems that allow remote control and enable the equipment as a whole that makes up the television studio to be automated, facilitating production tasks.

8. Remote control system for television cameras, according to claims 1 and 5, **characterized by** the fact that a computer can be incorporated into the network, and that this computer, with the assistance of a computer program and some special libraries, can allow the position of the heads to be known, with high resolution and with a frequency that allows the generation of virtual sets in real time.

9. Remote control system for television cameras, according to claims 1 and 2, **characterized by** the fact that the communications network can be an Ethernet network with standard connections, such as RJ-45, for example, with the video information captured by the camera able to be transmitted with sufficient quality, as long as its bandwidth permits.
